## Europäisches Patentamt
## European Patent Office
## Office européen des brevets

(19)

(11) Veröffentlichungsnummer: **0 193 804**
**B1**

(12) **EUROPÄISCHE PATENTSCHRIFT**

(45) Veröffentlichungstag der Patentschrift:
**26.10.88**

(51) Int. Cl.⁴: **A 01 C 7/00,** A 01 B 69/02

(21) Anmeldenummer: **86102221.8**

(22) Anmeldetag: **20.02.86**

(54) **Verfahren für die Aussaat von Nutzpflanzensaatgut.**

(30) Priorität: 22.02.85 DE 3506149
09.11.85 DE 3539758

(43) Veröffentlichungstag der Anmeldung:
**10.09.86 Patentblatt 86/37**

(45) Bekanntmachung des Hinweises auf die Patenterteilung:
**26.10.88 Patentblatt 88/43**

(84) Benannte Vertragsstaaten:
**AT BE DE FR GB LU NL SE**

(56) Entgegenhaltungen:
**EP - A - 0 132 521
DE - B - 1 299 154
DE - B - 2 609 323
US - A - 4 023 707
US - A - 4 062 305**

(73) Patentinhaber: **Amazonen-Werke H. Dreyer GmbH & Co.
KG, Postfach 51, D-4507 Hasbergen-Gaste (DE)**

(72) Erfinder: **Graf Hagen-Plettenberg, Friedrich, Haus
Sandfort, DE-4716 Olfen-Vinnum (DE)**

(74) Vertreter: **Patentanwälte Grünecker, Kinkeldey,
Stockmair & Partner, Maximilianstrasse 58,
D-8000 München 22 (DE)**

**Beschreibung**

Die Erfindung betrifft ein Verfahren zur Aussaat von Nutzpflanzensaatgut gemäss des Oberbegriffes des Anspruches 1.

Durch die DE-A-2659523 ist bereits ein derartiges Verfahren bekannt geworden. Bei diesem Verfahren wird das Nutzpflanzensaatgut, in diesem Falle Getreide, mit einer Sämaschine in den Boden eingebracht, wobei in vorher bestimmten Abständen breitere Streifen nicht mit dem Getreide besät werden. Diese nicht besäten Streifen werden Fahrgassen genannt, in denen bei nachfolgenden Pflanzenschutz- und Düngemassnahmen der jeweilige die Pflanzenschutzspritzen oder Düngerstreuer ziehende Ackerschlepper fährt, ohne aufgewachsenes bzw. stehendes Getreide niederfahren zu müssen.

Dieses seit langem in Europa angewandte Säverfahren mit Fahrgassen hat den grossen und unverzichtbaren Vorteil, dass es die exakte Ausbringung von Pflanzenschutz- und Düngemitteln auf einfache Weise ermöglicht und die unerwünschten und gefährlichen Überlappungen (Über- und Unterdosierungen der ausgebrachten Mittel) vermeidet.

Da ausserdem keine Getreidepflanzen mehr beschädigt werden oder niedergewalzt werden müssen, wenn die Getreidepflanzen bereits aufgewachsen sind, wird der Zwiewuchs vermieden und die Lagergefahr für das Getreide vermindert.

Um bereits vor dem Auflaufen des ausgesäten Getreides die Pflanzenschutz- und Düngemassnahmen exakt durchführen zu können, werden bei diesem bekanntem Verfahren die von dem Getreidesaatgut freigehaltenen Streifen durch sog. Vorauflaufmarkierungseinrichtungen gekennzeichnet. Diese Vorauflaufmarkierungseinrichtungen sind hinter der Sämaschine angeordnet und in den meisten Fällen als zur Fahrtrichtung schräg angestellte Scheiben ausgebildet, so dass sie eine Spur markieren können.

Durch das bisher bekannte Fahrgassenverfahren müssen jedoch bisher grosse Nachteile in Kauf genommen werden, die sich dann nach mehrjähriger Anwendung des o. g. Verfahrens bemerkbar machen.

Das häufige Befahren der Fahrgassen während einer Vegetationsperiode – mindestens 4mal, häufiger 6mal, in extremen Jahren 8mal und mehr – führt zu starken Bodenverdichtungen unter den Fahrgassen. In getreidereichen Fruchtfolgen geschieht es häufig, dass Fahrgassen wiederholt fast auf dieselben Stellen fallen, in denen schon in den Vorjahren Fahrgassen gewesen sind. Inzwischen müssen schon in vielen Betrieben spezielle Massnahmen gegen die Bodenverdichtung unter den Fahrgassen ergriffen werden, insbesondere nach nassen Jahren.

Weiterhin läuft nach heftigen Niederschlägen das Oberflächenwasser bevorzugt in den rinnenförmigen Vertiefungen der Fahrgassen ab. Das ablaufende Wasser reisst sehr tiefe Furchen in den Acker und schwemmt die Erde aus den Fahrgassen fort. Da wenig geneigte Flächen oft aus arbeitswirtschaftlichen Gründen nicht entlang einer Höhenlinie bewirtschaftet werden, sind diese Erosionen in den Fahrgassen eine sehr häufig auftretende Folge.

Die nicht besäten Flächen der Fahrgassen erreichen beachtliche Anteile. Wissenschaftliche Untersuchungen und die Erfahrungen der Praxis haben jedoch gezeigt, dass die Ertragsminderung nicht proportional zu den Flächen der Fahrgassen sind. Die Pflanzen am Rande der Fahrgassen holen sich nämlich zusätzliche Nährstoffe und Wasser aus dem Bereich der Fahrgassen. Es muss jedoch festgestellt werden, dass bisher noch keine alternative Nutzung der Fahrgassen möglich war.

Weiterhin ist bekannt, dass Mais und Rüben in Reihen abgelegt werden, die einen Abstand quer zur Fahrtrichtung gesehen von etwa 50 cm aufweisen. Diese etwa 50 cm breiten Streifen zwischen den Reihen, in denen das Nutzpflanzensaatgut (Mais und Rüben) abgelegt ist, liegt brach. Diese Streifen werden während der Vegetationsperiode mit Pflanzenschutzmitteln bespritzt, so dass die Pflanzen und Unkräuter in diesen Streifen vernichtet werden. Weiterhin wird der Boden in diesen breiten Streifen zu Beginn der Vegetationsperiode gehackt, um so den Unkräuterwuchs zu dämpfen. Die von dem die Einzelkornsägeräte ziehenden Schlepper zeugten Fahrspuren bzw. andere Fahrspuren, die sich ebenfalls zwischen den Reihen, in denen das Nutzpflanzensaatgut abgelegt ist, befinden, werden während der Vegetationsperiode für die nachfolgenden Pflanzenschutz- und Düngemassnahmen mehrfach befahren, so dass sich hier ebenfalls die gleichen Probleme wie die bei dem eingangs geschilderten Fahrgassenverfahren ergeben.

Aus der DE-B-2609323 ist des weiteren eine Drillmaschine bekannt, die mit einer Fahrgassenschaltung ausgestattet ist, so dass in gewünschten Abständen Fahrgassen angelegt werden können. Dass in den Fahrgassen irgendein Saatgut abgelegt werden soll, ist in dieser Druckschrift nicht erwähnt.

Aus der europäischen Patentanmeldung EP-A-0132521 ist es bekannt, auf unterschiedlichen Streifen einer Ackerfläche verschiedene Saatgüter im Laufe eines Jahres auszusäen. Dabei werden über einem bestimmten Teil des Ackers zunächst beispielsweise im Frühjahr «grass-grain»-Pflanzen gesät und es werden zwischen den mit diesem Pflanzentyp besäten Flächen Zwischenräume geschaffen. In diesen Zwischenräumen wird dann später im Jahr ein anderer Pflanzentyp ausgesät. Der Grundgedanke dieses Standes der Technik liegt darin, eine Ackerfläche über das Jahr hin optimal auszunützen, indem sie mit unterschiedlichen Pflanzen zu verschiedenen Zeiten bepflanzt und abgeerntet wird.

In der US-A-4062305 wird ein ähnlicher Gedanke verfolgt, wobei auch dort bei einer selbstfahrenden Sämaschine zwischen die bereits zu einem früheren Zeitpunkt ausgebrachten Pflanzen ein anderes Saatgut ausgesät wird, welches dann später abgeerntet werden kann.

Demgegenüber liegt der Erfindung die Aufgabe zugrunde, das gattungsgemässe Verfahren so weiterzubilden, dass nachteilige Folgen des wiederholten Befahrens der gleichen Fahrspuren für Pflanzenschutz und Düngemassnahmen auf dem Acker nicht auftreten. Die Erfindung will ferner eine entsprechende Vorrichtung hierzu schaffen.

Diese Aufgabe wird mit einem Verfahren der eingangs genannten Art dadurch gelöst, dass beim Aussäen des Nutzpflanzensaatgutes die Fahrstreifen gleichzeitig mit einem anderen, den Fahrstreifenboden stabilisierenden Saatgut besät werden. Eine Vorrichtung mit den Merkmalen der jeweils unabhängigen Vorrichtungsansprüchen löst diese Aufgabe ebenfalls.

Gemäss dem erfindungsgemässen Verfahren werden also die Fahrspuren des Schleppers auf dem Acker, die nicht mit Nutzpflanzen besät werden, mit «Fahrgassen geeigneten» und Sämereien bzw. Saatgut besät. Man kann diese Sämereien bzw. dieses Saatgut mit «Fahrgassenpflanzen» bezeichnen.

Infolge dieser Massnahme ist es nun in vorteilhafter Weise möglich, eine Vielzahl von Feinsämereien in Fahrgassen zur Aussaat zu bringen, um so die nachteiligen Folgen des häufigen Befahrens der Fahrgassen bzw. des Brachliegens von unbesäten Streifen, wie Fahrgassen, auf einfache und wirkungsvolle Weise zu beseitigen. In bevorzugter Weise werden die Fahrstreifen mit einem Saatgut besät, welches geeignet ist, im wesentlichen unbeschadet überfahren zu werden. Somit bleiben die Vorteile des Besäens der Fahrgassen auch noch nach vielfachem Befahren der Fahrstreifen erhalten.

Es ist zunächst erfindungsgemäss vorgesehen, dass verschiedenartige Sämereien für das Besäen der Fahrgassen eingesetzt werden, so dass der Landwirt sich jeweils die für seinen Fall optimalen Sämereien aussuchen kann.

In dem einen Fall wird man ein Saatgut wählen, welches Wurzeln bildet, die die befahrenen Fahrspuren auflockern. Es sind vor allem Gräser geeignet, die sich stark bestocken, um so die Tragfähigkeit des Bodens in den Fahrstreifen zu erhöhen und den Bodendruck zu mindern.

Weiterhin ist vorgesehen, dass ein Saatgut gewählt wird, welches Wurzeln bildet, die den Boden in den Fahrspuren nach dem Auflaufen zusammenhalten. Hierzu eignen sich u. a. üppig wurzelnde, sich stark bestockende Gräser, die so die Erosion in den Fahrgassen verhindern.

Des weiteren ist erfindungsgemäss vorgesehen, dass diese Fahrstreifen mit einem Saatgut besät werden, welches sehr schnell den Boden in den Fahrstreifen bedeckt. Hierdurch werden die schädlichen Auswirkungen einer längerfristigen Bedeckung des Bodens durch Pflanzenbewuchs in den Fahrgassen gemindert.

Ebenfalls ist es erfindungsgemäss möglich, dass diese Fahrstreifen mit einer Mischung der vorgenannten Saatgüter oder anderer Saatgüter besät werden. Durch Gemische bestimmter Feinsämereien können die vorgenannten Vorteile gleichzeitig erzielt werden. Darüberhinaus können durch eine entsprechende Mischung der Feinsämereien oder des Saatgutes, welches in die Fahrstreifen gesät wird, weitere Vorteile erreicht werden.

Durch Gemische bestimmter Feinsämereien können für das Niederwild zusätzlich artgerechte Biotope geschaffen werden. Hierbei ist es beispielsweise möglich, dass in den Fahrgassen Saatgüter in mehreren Reihen ausgebracht werden, wobei in jeder Reihe ein anderes Saatgut gesät wird. Auch ist es möglich, die Saatgüter zu mischen, so dass sie gemischt ausgesät werden.

Das vorgesehene Säverfahren eröffnet die Chance, ein im wahrsten Sinne des Wortes «brachliegendes» Potential von einer enorm grossen Fläche im positivsten Sinne nutzen zu können.

Weiterhin kann erfindungsgemäss vorgesehen sein, dass diese Fahrstreifen mit einem Saatgut besät werden, welches zunächst im Herbst aufläuft, Wurzeln bildet, jedoch nicht winterhart ist und bei Frost abstirbt, wobei die Wurzelmasse erhalten bleibt. Infolge dieser Massnahme wird erreicht, dass sich bei der Ernte des Getreides das in den Fahrstreifen ausgesäte Saatgut, welches ein anderes als das zu erntende Getreide ist, nicht mit geerntet wird. Somit wird also automatisch durch die Auswahl des Saatgutes, welches in den Fahrstreifen ausgesät wird und bei Frost abstirbt da es nicht winterhart ist, nicht mehr im Frühjahr und Sommer vorhanden ist, und somit nicht mit geerntet wird. Da jedoch die Wurzelmasse des in den Fahrstreifen ausgesäten Saatgutes erhalten bleibt, bleiben alle Vorteile des Besäens von Fahrgassen erhalten.

Auch ist es möglich, in den Fahrstreifen Saatgut auszusäen, welches das Wild von dem Fressen der Nutzpflanzen ablenkt. Wenn beispielsweise in den Fahrstreifen Sommergerste ausgesät wird, während im übrigen Feld Wintergerste ausgesät wird, so haben Versuche gezeigt, dass das Wild die Sommergerste in den Fahrstreifen abfrisst, jedoch nicht die Wintergerste, die als Nutzpflanzensaatgut ausgesät worden ist. Es findet also einerseits ein vorteilhafter Ablenkungseffekt für das Wild vom Nutzpflanzensaatgut statt, so dass keine Ertragseinbussen durch Wildschaden entstehen und andererseits wird durch das Abfressen der Sommergerste in den Fahrstreifen erreicht, dass im Sommer beim Abernten der Wintergerste keine Sommergerste mehr vorhanden ist, so dass man ausschliesslich Wintergerste ernten kann. Dieses ist für Saatgutvermehrungsbetriebe von grosser Bedeutung. Die Sommergerste hat sich, bevor sie von dem Wild abgefressen wird, soweit entwickelt, dass das Wurzelwerk ausreicht, um Erosionsschäden und Bodenverdichtungen durch Fahrzeuge zu verhindern. Des weiteren ergibt sich der Vorteil, wenn beispielsweise Sommergerste in den Fahrstreifen ausgesät und Wintergerste als Nutzpflanzensaatgut angebaut wird, dass man in vielen Fällen keine besonderen Massnahmen an der Pflanzenschutzspritze ergreifen muss, da durch viele Pflanzenschutzmittel die Sommergerste nicht abgetötet wird. Auch gibt es eine andere Reihe von Pflanzen, die man in den Fahrstreifen aussäen kann, die bestimmte Spritzmittel ebenfalls vertragen, so dass keine besonderen Massnahmen an der Pflanzenschutzspritze zu ergreifen sind.

Falls jedoch Sämereien in den Fahrstreifen ausgesät worden sind, die nicht mit Spritzmittel in Berührung kommen dürfen, ist es zweckmässig, die Spritzdüsen im Bereich der Fahrgassen ausser Betrieb zu setzen und im Bereich der Fahrgassen jeweils eine zusätzliche Düsenschiene mit entsprechend abgestimmten Düsen anzuordnen, so dass bis an die Fahrstreifen heran jeweils das Spritzmittel in gleichmässiger Spritzstärke ausgebracht wird, während die Fahrstreifen mit den «Fahrgassensämereien» nicht mit Spritzmittel besprüht werden. Des weiteren kann es zweckmässig sein, an dem Spritzrahmen etwa aufrecht verlaufende Schutzschirme anzuordnen, so dass kein Spritzmittel in die Fahrstreifen gelangen kann.

Vorgesehen zur Durchführung des Verfahrens ist eine Vorrichtung, bestehend aus einer Sämaschine mit Vorratsbehälter und Dosierorganen, die das sich im Vorratsbehälter befindliche Nutzpflanzensaatgut in einstellbaren Mengen Säelementen zuführen, die dieses Saatgut in Reihen im Boden ablegen, wobei in periodischer Wiederkehr in Abständen, die ein Vielfaches der Arbeitsbreite der Sämaschine entsprechen, die Saatgutzufuhr zu bestimmten Säelementen durch Saatgutzufuhrunterbrechungselementen abgeschaltet wird, so dass Streifen entstehen, die von dem Nutzpflanzensaatgut freigehalten werden und für die Laufräder von Fahrzeugen für nachfolgende Pflanzenschutz- und Düngemassnahmen zum Befahren vorgesehen sind. Hierbei ist dann erfindungsgemäss an der Sämaschine eine zusätzliche Sävorrichtung angeordnet, die den in den freizuhaltenden Streifen angeordneten Säelementen ein anderes Saatgut zuführen. Hierbei werden in einfachster Weise mit den an der Sämaschine angeordneten Säscharen die sog. Fahrgassensämereien abgelegt. Hierzu kann die Sämaschine zumindest einen weiteren Vorratsbehälter mit Dosierorganen aufweisen, die den in den freizuhaltenden Streifen angeordneten Säelementen, beispielsweise Säschare, das andere Saatgut zuführen.

In einer anderen Ausführungsform ist vorgesehen, dass zusätzliche Säelemente für das andere Saatgut (Fahrgassensämereien) an der Sämaschine angeordnet sind. Hierdurch ist es möglich, dass das Fahrgassensaatgut in anderer Weise als das Nutzpflanzensaatgut im Boden abgelegt wird. In vielen Fällen ist es nämlich erforderlich, dass die Feinsämereien wesentlich flacher als die Nutzpflanzen im Boden abgelegt werden müssen. Infolge dieser Massnahme kann den besonderen Bedürfnissen der Feinsämereien in einfacher Weise Rechnung getragen werden.

Bei einer Sämaschine, an der eine Schaltvorrichtung zum Schalten der Saatgutunterbrechungselemente angeordnet ist, ist erfindungsgemäss vorgesehen, dass die Sävorrichtung für das andere Saatgut mit der Schaltvorrichtung derart gekoppelt ist, dass die Sävorrichtung jeweils das andere Saatgut ausbringt, wenn die Saatgutunterbrechungselemente die Saatgutzufuhr zu den Fahrgassensäscharen unterbrechen. Hierbei werden automatisch Fahrgassensämereien in den Fahrstreifen abgelegt, wenn Fahrgassen angelegt werden, d.h. wenn die Zufuhr des Nutzpflanzensaatgutes in den Bereich der Fahrgassen unterbrochen ist.

Weiterhin ist bei einer erfindungsgemässen Ausführung vorgesehen, dass bei einer Sämaschine, an der eine Schaltvorrichtung zum Schalten der Saatgutunterbrechungselemente und eine Vorauflaufmarkierungseinrichtung angeordnet ist, dass die Sävorrichtung für das andere Saatgut auf der Vorauflaufmarkierungseinrichtung angeordnet ist. Hierdurch ergibt sich eine äusserst einfache Ausführung der erfindungsgemässen Vorrichtung. Die Sävorrichtung für das Fahrgassensaatgut kann in dem Bereich an der Sämaschine angeordnet werden, in dem auch die Fahrgassen angelegt werden. Hierbei ist es in vorteilhafter Weise bei einer Vorauflaufmarkierungseinrichtung, die eine drehbar gelagerte Markierungsscheibe aufweist, möglich, dass an der Markierungsscheibe ein Antrieb angeordnet ist, über den die Dosierorgane der Sävorrichtung antreibbar sind. Hierdurch werden die Dosierorgane der Sävorrichtung für das Fahrgassensaatgut direkt von der Markierungsscheibe aus angetrieben. Das Antreiben der Dosierorgane und somit das Ausbringen der Fahrgassensämereien erfolgt immer nur dann, wenn die Markierungsscheibe abgesenkt ist und so eine Spur markiert. Das Markieren der Fahrgasse durch die Markierungsscheibe erfolgt immer nur dann, wenn auch eine Fahrgasse angelegt wird. Wenn keine Fahrgasse angelegt wird, ist die Markierungsscheibe angehoben, so dass sie sich auch nicht dreht. Somit wird kein Fahrgassensaatgut ausgebracht.

Bei einer Vorrichtung, die aus einem Einzelkornsägerät mit mehreren in grösseren Querabständen zueinander angeordneten Säelementen, die das auszubringende Saatgut, wie Mais und Rüben im Boden ablegen, ist erfindungsgemäss vorgesehen, dass an dem Einzelkornsägerät eine zusätzliche Sävorrichtung angeordnet ist, die ein anderes Saatgut in den Fahrspuren des Einzelkornsägerätes bzw. des das Einzelkornsägerät ziehenden Schleppers ablegen. In diesem Falle werden in der Schlepperspur die sog. Fahrgassensämereien abgelegt. Hierdurch werden die gleichen Vorteile wie bei dem Fahrgassensäverfahren erzielt. Ebenfalls ist es bei diesem Einzelkornsägerät in einer erfindungsgemässen Ausführung vorgesehen, dass das Fahrgassensaatgut in den Streifen zwischen den Reihen, in denen Mais oder Rüben abgelegt sind, in denen später die Laufräder von Fahrzeugen für die nachfolgenden Pflanzenschutz- und Düngemassnahmen fahren, ablegen.

Weiterhin kann es erfindungsgemäss sein, dass bei der Pflanzenschutzspritze mit einem Spritzgestänge zum Durchführen der Pflanzenschutzmassnahmen, im Bereich der mit dem Fahrgassensaatgut besäten Streifen kein Spritzmittel ausgebracht wird. Hierzu sind im Bereich dieser Streifen Abdeckschirme an dem Spritzgestänge angeordnet, so dass kein Spritzmittel auf die Fahrgassenpflanzen gelangen kann. Hierdurch wird erreicht, dass die Fahrgassenpflanzen durch das Spritzmittel keinen Schaden erleiden. Der gleiche Vorteil kann dadurch erreicht werden, dass in dem Bereich dieser Streifen an dem Spritzgestänge sog. OC-Düsen angeordnet sind. Weiterhin sieht die Erfindung vor, dass die Anordnung der Düsen den Fahrgassen anzupassen ist, so dass die Spritzmittel gleichmässig verteilt über das Nutzpflanzensaatgut auszubringen sind.

Durch die US-Patentschrift 40 23 707 ist ein Säverfahren zum Markieren von Fahrgassenspuren für nachfolgende Pflanzenschutz- und Düngemassnahmen bekannt, bei welchem einem Säschar zusätzlich zu dem Nutzpflanzensaat ein anderes Saatgut zugeleitet wird. Hierbei ist vorgesehen, dass dieses andere Saatgut kontinuierlich oder schub- bzw. häufchenweise dem betreffenden Säschar zugeleitet und somit zusätzlich zu dem Nutzpflanzensaatgut in der betreffenden Reihe in den Boden abgelegt wird. Bei diesem bekannten Säverfahren werden also keine breiten Streifen, die für die Fahrspur für nachfolgende Pflanzenschutz- und Düngemassnahmen benutzt werden, von dem Nutzpflanzensaatgut freigehalten und auch nicht mit einem anderen Saatgut in anmeldungsgemässem Sinne besät. Vielmehr wird dieses andere Saatgut bei dem bekannten Säverfahren mit dem Nutzpflanzensaatgut in einer Reihe ausgebracht, um die Fahrspuren zu kennzeichnen, in denen bei den nachfolgenden Pflanzenschutz- und Düngemassnahmen gefahren wird, um hierbei genau Anschlussfahren zu können. Dieses bekannte Säverfahren ist also ein Markierungsverfahren mittels eines anderen Saatgutes an Stelle von mechanischen Spurmarkierungseinrichtungen, wie beispielsweise Markierungsscheiben entsprechend des Gegenstandes der DE-PS-26 59 523.

Weitere Vorteile und Einzelheiten der Erfindung sind der Beispielsbeschreibung und den Zeichnungen zu entnehmen. Hierbei zeigen

Fig. 1 ein im erfindungsgemässen Säverfahren mit der entsprechend ausgerüsteten Sämaschine angelegtes Feld in Prinzipdarstellung und in der Draufsicht,

Fig. 2 eine erfindungsgemäss ausgerüstete Sämaschine in der Seitenansicht,

Fig. 3 die Sämaschine gemäss Fig. 2 in der Ansicht von hinten

Fig. 4 ein im erfindungsgemässen Säverfahren mit der Sämaschine gemäss den Fig. 2 und 3 angelegtes Feld ausschnittsweise in der Draufsicht,

Fig. 5 eine andere erfindungsgemäss ausgerüstete Sämaschine in der Seitenansicht,

Fig. 6 die Sämaschine gemäss Fig. 5 in der Ansicht von hinten,

Fig. 7 ein im erfindungsgemässen Säverfahren mit der Sämaschine gemäss den Fig. 5 und 6 angelegtes Feld ausschnittsweise in der Draufsicht,

Fig. 8 eine erfindungsgemäss ausgerüstete Pflanzenschutzspritze in der Ansicht von hinten und

Fig. 9 eine erfindungsgemäss ausgerüstete Einzelkornsämaschine in Prinzipdarstellung beim Ausbringen von Saatgut auf einem Feld in dem erfindungsgemässen Verfahren in der Draufsicht.

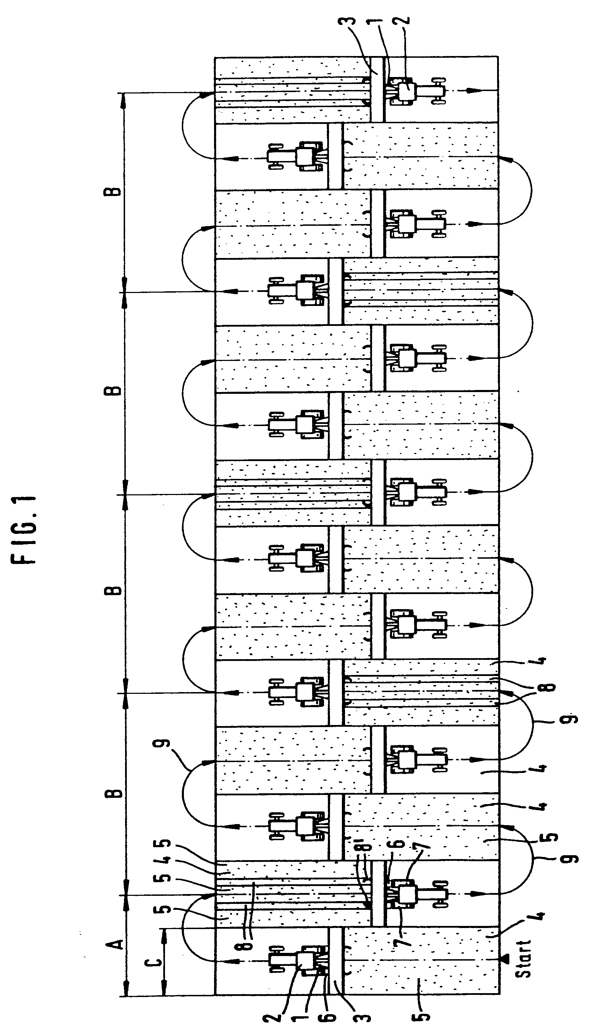

Über das in Fig. 1 dargestellte Feld wird die am Kraftheber 1 des Schleppers 2 angekuppelte Sämaschine 3 in Hin- und Herfahrt gefahren, wobei die jeweiligen Arbeitsbahnen 4 der Sämaschine 3 einen genauen Anschluss zueinander erhalten. Zur Verdeutlichung sind die mit Saatgut beschickten Flächen 5 des Feldes mit leichter Schraffur wiedergegeben. Wie klar erkennbar ist, wird bei jeder dritten Arbeitsbahn 4 die Saatgutzufuhr für den Bereich der Spuren 6 der Schlepperräder 7 abgeschaltet, so dass die Spuren 8 freibleiben und für das Fahren der Maschinen für nachfolgende Pflanzenschutz- und Düngemassnahmen benutzt werden können, ohne dass das in den schraffierten Flächen 5 abgelegte Saatgut befahren bzw. niedergefahren werden muss. Die von dem Saatgut freigehaltenen Streifen 8 werden als Fahrgassen bezeichnet. Die erste Fahrgasse 8 wird bei der zweiten Feldüberfahrt in der zweiten Arbeitsbahn 4 im Abstand A vom Feldrand angelegt. Der Abstand A entspricht der halben Arbeitsbreite B der Maschinen für die nachfolgenden Pflanzenschutz- und Düngemassnahmen. Folglich werden die weiteren Fahrgassen 8 jeweils im Abstand B zueinander angelegt. In dem Ausführungsbeispiel gemäss Fig. 1 ist die Arbeitsbreite B dreimal so gross wie die Arbeitsbreite C der Sämaschine 3. Das Ab- und Wiedereinschalten der Saatgutzufuhr zu den Säscharen in den Fahrgassen 8 wird hierbei durch Betätigen einer Schaltvorrichtung bei dem durch die Pfeile 9 gekennzeichneten Wendevorgang am Feldende bewirkt. Hinter der Sämaschine 3 sind die Markierungsscheiben 8' zum Markieren der Fahrgassen 8 angeordnet, so dass bereits vor dem Auflaufen des Saatgutes in den Fahrgassen 8 bei den Pflanzenschutz- und Düngemassnahmen gefahren werden kann.

Diese Markierungsscheiben 8' werden, wie später noch erläutert wird, über eine Hebevorrichtung beim Anlegen einer Fahrgasse 8 abgesenkt, so dass sie die Fahrgasse 8 markieren können, und bei den Arbeitsbahnen, in denen keine Fahrgasse 8 angelegt wird, angehoben. Weiterhin ist in die Sämaschine 3 eine Sävorrichtung für das Besäen der Fahrgassen 8, welches später noch näher erläutert wird, integriert. Diese Sävorrichtung ist mit der Schaltvorrichtung für die Fahrgassen 8 gekoppelt, so dass diese Sävorrichtung immer nur dann Saatgut ausbringt, wenn eine Fahrgasse 8 angelegt wird. Diese Sävorrichtung legt ein anderes Saatgut in den Fahrgassen 8 als die Sämaschine in den Flächen 5 ab.

In den Flächen 5 wird das sog. Nutzpflanzensaatgut – wie beispielsweise Getreide, Mais etc. – abgelegt; während in den Fahrgassen 8 fahrgassengeeignete Feinsämereien – wie beispielsweise Samen von bestimmten sich stark bestockenden Gräsern, um die Tragfähigkeit der Fahrgassen zu erhöhen, und den Bodendruck zu mindern; Samen von üppig wurzelnden, sich stark bestockenden Gräsern, die die Erosion in den Fahrgassen verhindern; Gemische bestimmter Feinsämereien, um für das Niederwild zusätzlich artgerechte Biotope zu schaffen; Samen, welche sehr schnell den Boden bedecken, und so die schädlichen Auswirkungen einer längerfristigen Unterbrechung der Bedeckung des Bodens durch Pflanzenbewuchs in den Fahrgassen zu mindern; Gemische von Samen mit den vorbeschriebenen Eigenschaften; etc. – abgelegt werden.

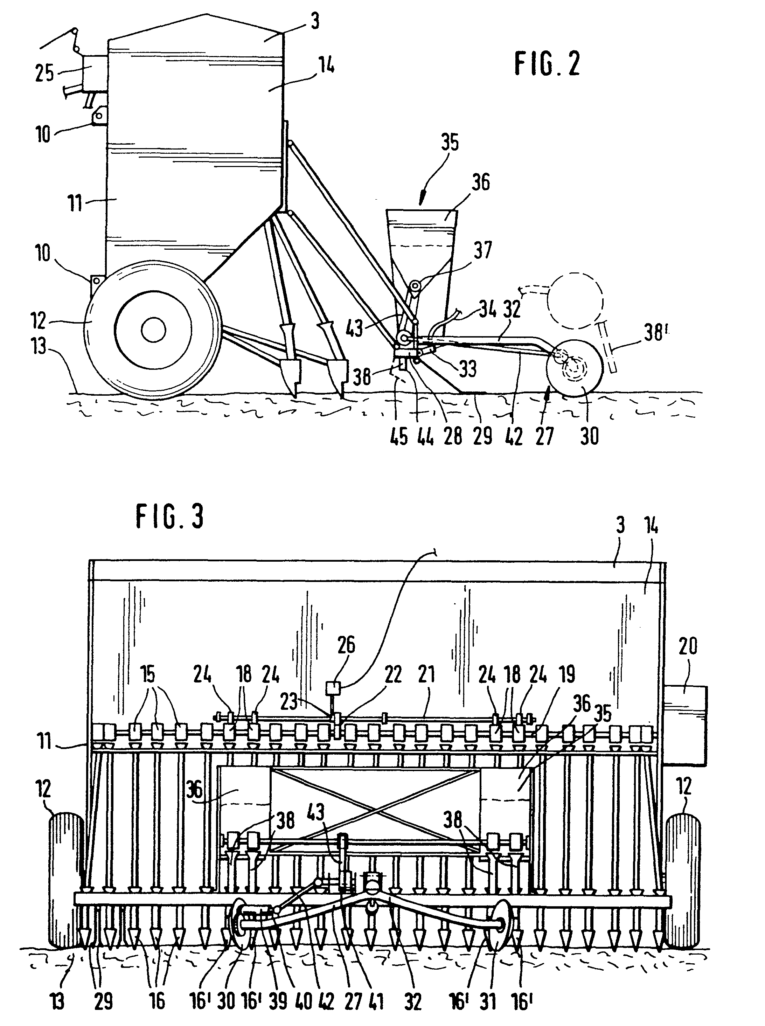

Anhand der Fig. 2 bis 4 wird das erfindungsgemässe Verfahren und die Vorrichtung zur Durchführung dieses Verfahrens näher erläutert:

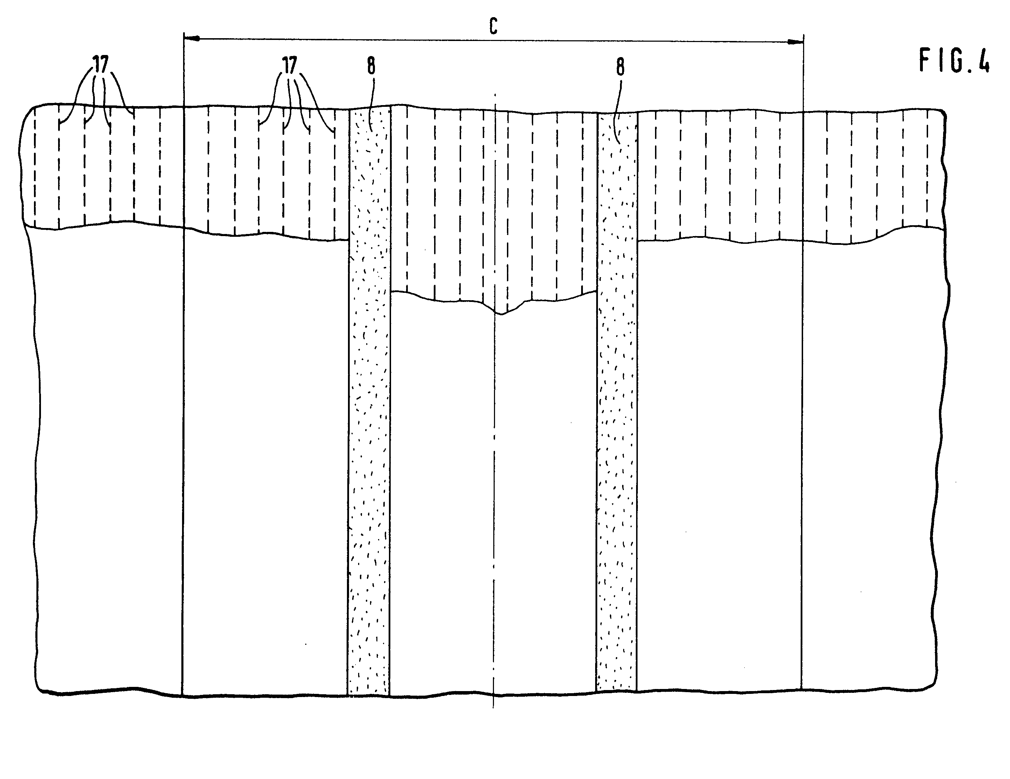

Die Sämaschine 3 wird über ihre Kupplungselemente 10 an den Dreipunktkraftheber eines Schleppers angekuppelt. Die Sämaschine 3 weist einen Rahmen 11 auf, der sich in abgesenkter Betriebsstellung über die Laufräder 12 auf dem Boden 13 abstützt und an dem der Vorratsbehälter 14 für das Nutzpflanzensaatgut angebracht ist. Hierbei wird das im Vorratsbehälter 14 befindliche Nutzpflanzensaatgut durch die Dosierorgane 15 über die Säschare 16 in dem Boden 13 in den mit gestrichelten Linien in Fig. 4 angedeuteten Reihen 17 abgelegt. Ferner sind die Dosierräder der Dosierorgane 15, die das Saatgut den innerhalb der Fahrgassen 8 angeordneten Säscharen 16' zuführen, frei drehbar auf der Dosierwelle 19 angeordnet. Diese Dosierwelle 19 wird von den Laufrädern 12 über das Regelgetriebe 20 angetrieben. Parallel zu der Dosierwelle 19 ist an dem Vorratsbehälter 14 oberhalb der Dosierräder 16 die Vorgelegewelle 21 gelagert. Die Vorgelegewelle 21 ist über den Zahnradtrieb 22, der die Schlingfederkupplung 23 aufweist, drehmomentübertragbar verbunden. Weiterhin sind auf der Vorgelegewelle 21 die Zahnräder 24 drehbar angeordnet, deren Verzahnung in die Verzahnung der frei drehbar auf der Dosierwelle 19 angeordneten Dosierräder 16 eingreifen. Somit werden die Dosierräder 16 über die Vorgelegewelle 21 angetrieben, wenn die Schlingfederkupplung 23 eingeschaltet ist.

Weiterhin ist an der Sämaschine 3 die Schaltvorrichtung 25 angeordnet, die mittels des als Hubmagnet 26 ausgebildeten Schaltelementes die Schlingfederkupplung 23 betätigt. Die Schaltvorrichtung 25 weist eine Zählvorrichtung auf, die jeweils beim Wenden der Sämaschine 3 am Feldende weiterzählt. Die Zählvorrichtung der Schaltvorrichtung 25 ist beim Ausführungsbeispiel so ausgelegt bzw. programmiert, dass sie bei jeder dritten Feldüberfahrt Impulse an die Schaltvorrichtung 25 übermittelt, so dass durch Ein- bzw. Ausschalten der Schlingfederkupplung 23 eine Fahrgasse 8 angelegt bzw. nicht angelegt wird. Somit wird die Saatgutzufuhr zu den Säscharen 16' über die Schaltvorrichtung 25, die die Hubmagnete 26 betätigt, in periodischer Wiederkehr unterbrochen.

Hinter den Säscharen 16' ist die Fahrgassenmarkierungseinrichtung 27 an dem an der Sämaschine 3 angeordneten Querbalken 28 des Saatstriegels 29, von denen in Fig. 3 nur einige angedeutet sind, angeordnet. Die Fahrgassenmarkierungseinrichtung 27 weist die schräg angestellten Spurreisserscheiben 30 und 31 auf, die an der Halterung 32 drehbar gelagert sind. Zwischen der Halterung 32 und dem Querbalken 28 ist der Hubzylinder 33 angeordnet. Der Hubzylinder 33 ist über die Leitung 34 mit der Schaltvorrichtung 25 verbunden, so dass über den Hubzylinder 33 die Spurreisserscheiben 30 und 31 beim Anlegen einer Fahrgasse 8, d. h. wenn die Saatgutzufuhr zu den Säscharen 16' unterbrochen ist, in die in Fig. 2 dargestellte Stellung abgesenkt werden. In dieser abgesenkten Stellung dringen die Spurreisserscheiben 30 und 31 in den Boden ein und markieren durch ihre Schrägstellung und Drehbewegung jeweils eine Spur. Wenn keine Fahrgasse 8 angelegt wird, werden die Spurreisserscheiben 30 und 31 durch den Hubzylinder 33 in die mit unterbrochenen Linien dargestellte Stellung gebracht. Das Anheben und Absenken der Spurreisserscheiben 30 und 31 wird im Gleichklang mit dem Ein- und Abschalten der als Saatgutzufuhrunterbrechungselemente ausgebildeten Dosierräder 18 gesteuert.

Schliesslich ist noch auf dem Querbalken 28 an der Fahrgassen- bzw. Vorauflaufmarkierungseinrichtung 27 die zusätzliche Sävorrichtung 35 angeordnet. Diese Sävorrichtung 35 weist die Vorratsbehälter 36 auf, in deren unterem Bereich die Dosiervorrichtung 37 angeordnet ist. Über die Dosiervorrichtung 37 wird das sich in den Vorratsbehältern 36 befindliche «Fahrgassensaatgut» den Särohren 38 zugeleitet, die in dem Bereich der Fahrgassen 8 vor dem Saatstriegel 29 ausmünden. Die Dosiereinrichtung 37 der zusätzlichen Sävorrichtung 35 wird von der Spurreisserscheibe 30 angetrieben. An der Halterung 32 ist das Getriebegehäuse 39 angeordnet. Dieses Getriebegehäuse 39 umschliesst das an der Spurreisserscheibe 30 angeordnete Zahnrad. Dieses Zahnrad treibt die aus dem Getriebegehäuse 39 ragende Antriebswelle 40 an. In der Mitte der Halterung 32 ist an deren hinteren Ende das Zwischengetriebe 41 angeordnet. Zwischen dem Zwischengetriebe 41 und der Antriebswelle 40 ist die Gelenkwelle 42 angebracht. Von dem Zwischengetriebe 41 aus wird über den Ketten- und Riementrieb 43 die Dosiervorrichtung 37 angetrieben. Durch den Antrieb der Dosiervorrichtung 37 der zusätzlichen Sävorrichtung 35 über die Spurreisserscheibe 30 der Fahrgassenmarkierungseinrichtung 27 wird das sich in dem Vorratsbehälter 36 befindliche «Fahrgassensaatgut» nur dann ausgebracht, wenn auch eine Fahrgasse angelegt wird. Somit ist also sichergestellt, dass die Sävorrichtung 35 für das «Fahrgassensaatgut» derart mit der Schaltvorrichtung gekoppelt ist, dass die Sävorrichtung 35 das «Fahrgassensaatgut» nur dann ausbringt, wenn die als Dosierräder 18 ausgebildeten Saatgutunterbrechungselemente die Zufuhr des Nutzpflanzensaatgutes aus dem Vorratsbehälter 14 der Sämaschine 3 zu den «Fahrgassensäscharen» 16' unterbrechen.

Damit das «Fahrgassensaatgut» in guter Breitverteilung gemäss Fig. 4 in den Fahrgassen 8 abgelegt werden kann, ist es bei einigen Saatgütern erforderlich, in einem kleinen Abstand unterhalb der Auslaufmündungen 44 die schräg angestellten Prallplatten 45, die mit unterbrochenen Linien angedeutet sind, anzuordnen.

Bei anderen «Fahrgassensaatgütern» kann es vorteilhaft sein, wenn die Särohre 38', wie in Fig. 2 mit strichpunktierten Linien angedeutet ist, hinter dem Saatstriegel 29 ausmünden.

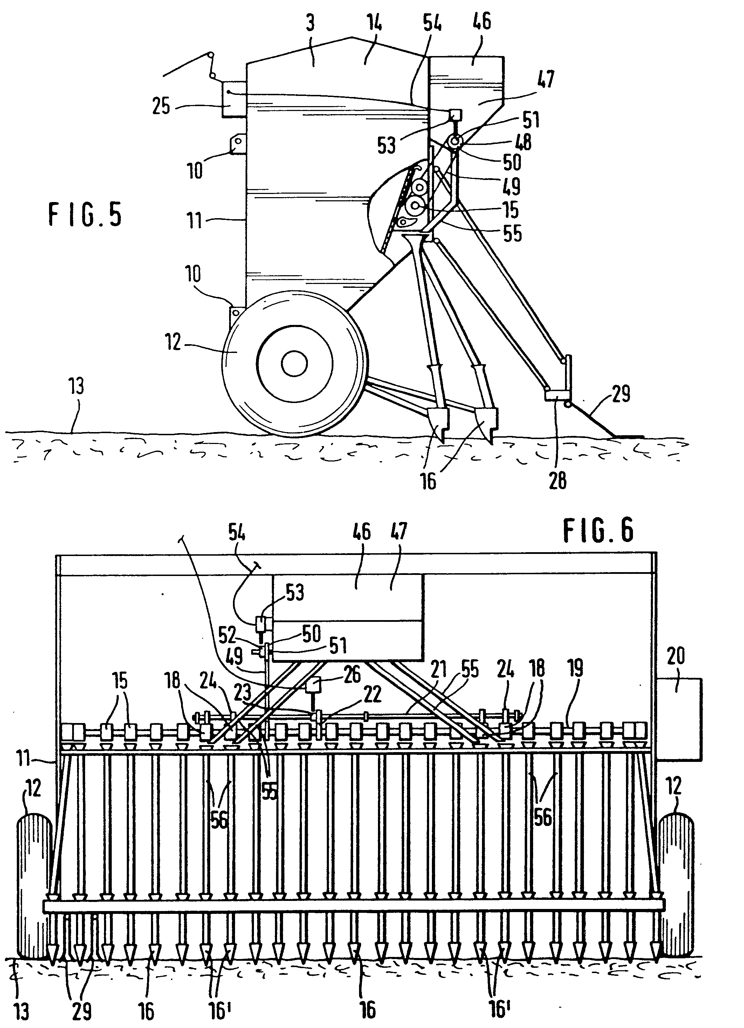

Die Sämaschine 3 gemäss den Fig. 5 und 6 unterscheidet sich von der Sämaschine 3 gemäss den Fig. 2 und 3 im wesentlichen durch die andere Anordnung und Ausbildung der zusätzlichen Sävorrichtung für das «Fahrgassensaatgut».

Die Sämaschine 3 gemäss den Fig. 5 und 6 ist hinsichtlich der Saatgutzufuhrunterbrechungselemente und der Schaltvorrichtung 25 genauso wie die Sämaschine 3 gemäss den Fig. 2 und 3 ausgebildet, so dass auf eine Beschreibung der Sämaschine 3 an dieser Stelle verzichtet werden kann und nur die zusätzliche Sävorrichtung 46 gemäss den Fig. 5 und 6 beschrieben wird.

Die zusätzliche Sävorrichtung 46 ist an der Rückseite des Vorratsbehälters 14 der Sämaschine angeordnet. Diese Sävorrichtung 46 für das «Fahrgassensaatgut» weist den Vorratsbehälter 47 auf, in dessen unterem Bereich die Dosiervorrichtung 48 sich befindet. Die Dosiervorrichtung 48 wird von der Dosierwelle 19 über den Kettentrieb 49 angetrieben, wobei das Zahnrad 50 des Kettentriebes 49, welches auf der Welle 51 der Dosiervorrichtung 48 sich befindet, eine Schlingfederkupplung 52 aufweist und frei drehbar auf der Welle 51 angeordnet ist. Durch die Schlingfederkupplung 52 ist das Zahnrad 50 drehmomentübertragbar mit der Welle 51 zu kuppeln. Ausserdem ist an dem Vorratsbehälter 47 das als Hubmagnet 53 ausgebildete Schaltelement angeordnet, welches die Schlingfederkupplung 52 betätigt. Der Hubmagnet 53 ist über die Leitung 54 mit der Schaltvorrichtung 25 gekoppelt. Unterhalb der Dosiervorrichtung 48 sind die Dosierrohre 55 angeordnet, die jeweils einem Särohr 56 zugeordnet sind, die das Saatgut den in den Fahrgassen 8 angeordneten Säscharen 16' zuführen bzw. den als Saatgutzufuhrunterbrechungselementen ausgebildeten Dosierrädern 18 zugeordnet sind.

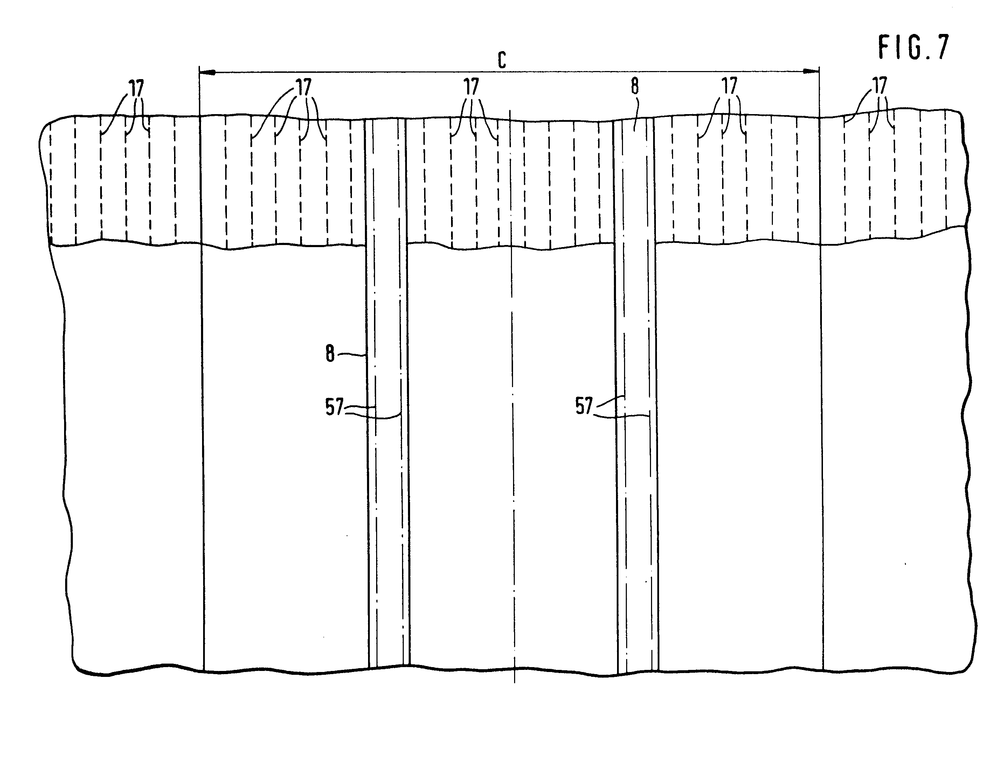

Durch die Schaltvorrichtung 25 werden der Hubmagnet 26 für die Saatgutzufuhrunterbrechungselemente 18 und der Hubmagnet 53 für die Fahrgassendosiervorrichtung 48 jeweils abwechselnd und in periodischer Wiederkehr geschaltet. Wenn von der Sämaschine 3 keine Fahrgassen bei der entsprechenden Feldüberfahrt angelegt werden, bringen die Dosierräder 18 Nutzpflanzensaatgut aus dem Vorratsbehälter 14 aus und leiten es den Säscharen 16' zu. In diesem Falle ist die Schlingfederkupplung 52 durch den Hubmagneten 53 gelöst, so dass die Dosiervorrichtung 48 der zusätzlichen Sävorrichtung 46 nicht angetrieben wird. Soll dann nach der entsprechenden und vorgesehenen Anzahl von Feldüberfahrten eine Fahrgasse 8 angelegt werden, so gibt die Schaltvorrichtung 25 entsprechende Schaltimpulse an die Hubmagnete 26 und 53. Durch den Hubmagneten 26 wird die Schlingfederkupplung 23 gelöst, so dass die drehmomentübertragbare Verbindung zwischen den Dosierrädern 18 und der Vorgelegewelle 21 aufgehoben wird. Die Zufuhr von Nutzpflanzensaatgut aus dem Vorratsbehälter 14 zu den «Fahrgassensäscharen» ist somit für diese Feldüberfahrt unterbrochen. Gleichzeitig wird über den Hubmagneten 53 die Schlingfederkupplung 52 so geschaltet, dass durch die Schlingfederkupplung 52 eine drehmomentübertragbare Verbindung zwischen dem Zahnrad 15 und der Welle 51 der Dosiervorrichtung 48 für das «Fahrgassensaatgut» hergestellt wird. Dieses «Fahrgassensaatgut» wird dann bei dieser Feldüberfahrt den Säscharen 16' zugeführt, die es in den in der Fig. 7 mit strichpunktierten Linien angedeuteten Reihen 57 in den von dem Nutzpflanzensaatgut freigehaltenen Streifen – Fahrgassen 8 – ablegen. Nach Beendigung dieser Feldüberfahrt erhalten beim Wendevorgang der Sämaschine 3 die Hubmagnete 26 und 53 erneut von der Schaltvorrichtung 25 einen Schaltimpuls. Somit wird durch die Schwingfederkupplung 53 die drehmomentübertragbare Verbindung aufgehoben, während über die Schlingfederkupplung 26 die drehmomentübertragbare Verbindung wieder hergestellt wird.

Selbstverständlich ist es möglich, dass auch hinter der Sämaschine gemäss den Fig. 5 und 6 die Fahrgassenmarkierungsvorrichtung 27 gemäss den Fig. 2 und 3 anzuordnen ist.

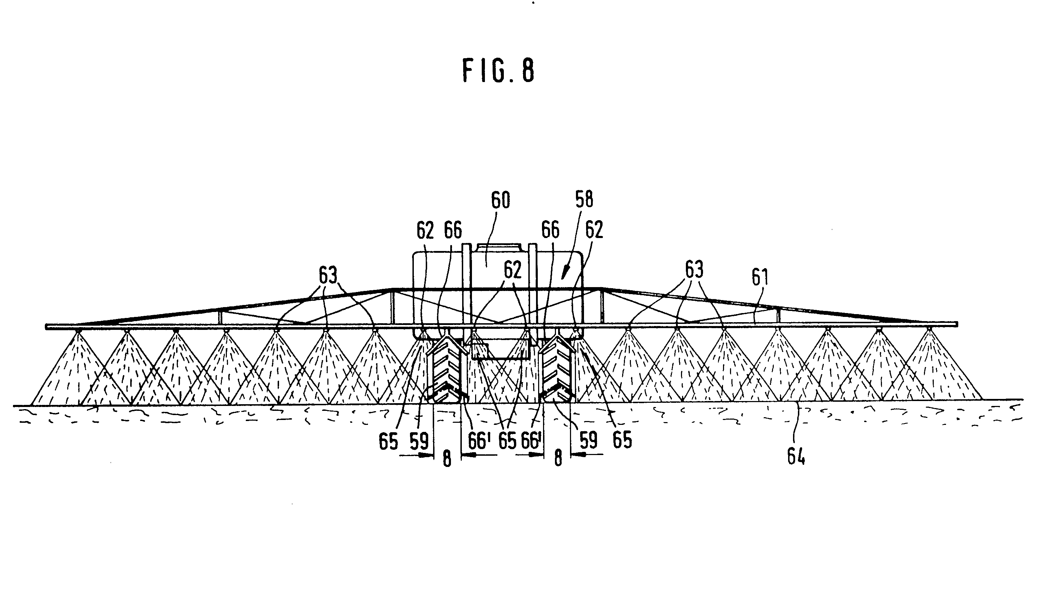

Die Pflanzenschutzspritze 58 gemäss Fig. 8, die bei den nachfolgenden Pflanzenschutz- und Düngemassnahmen eingesetzt wird, ist an dem Schlepper angebaut, von dem lediglich die Laufräder 59 eingezeichnet sind. Die Laufräder 59 des Schleppers fahren in den mit dem «Fahrgassensaatgut» besäten Fahrgassen 8 über das Feld. Die Pflanzenschutzspritze 58 weist einen Flüssigkeitsbehälter 60 und das an dem Rahmen der Pflanzenschutzspritze 58 angeordnete Spritzgestänge 61 auf. An dem Spritzgestänge 61 sind die Spritzdüsen 62 und 63 angeordnet, die das in dem Behälter 60 sich befindliche Spritzmittel gleichmässig auf der Bodenoberfläche 64 verteilen. Die Spritzdüsen 62 in dem Bereich unmittelbar neben den Fahrgassen 8 sind als OC-Düsen (off-center, d. h. exzentr. Sprühbereich) ausgebildet, die praktisch von der Düsenmitte aus nur zu einer Seite spritzen, wie dies in Fig. 8 an den angedeuteten Spritzkegeln 65 deutlich zu erkennen ist. Somit wird in dem Bereich der Fahrgassen 8 kein Spritzmittel ausgebracht, damit die Pflanzen in den Fahrgassen 8 nicht abgetötet werden. Zusätzlich sind an dem Spritzgestänge 61 noch oberhalb der Fahrgassen 8 die dachförmigen Abdeckschirme 66 angeordnet, die zusätzlich verhindern, dass Spritzmittel in die Fahrgassen 8 gelangt. Hierbei kann der Abdeckschirm 66 dicht unter dem Spritzgestänge 61 oder wie mit strichpunktierten Linien angedeutet, tiefer bzw. nahe der Bodenoberfläche angeordnet sein. Die niedrige Anordnung des Abdeckschirmes 66' ist bei niedrigen Pflanzen und die höhere Anordnung des Abdeckschirmes 66 bei hoch aufgewachsenen Pflanzen zu bevorzugen. Somit wird also kein Spritzmittel in dem Bereich der mit dem «Fahrgassensaatgut» besäten breiteren Streifen ausgebracht.

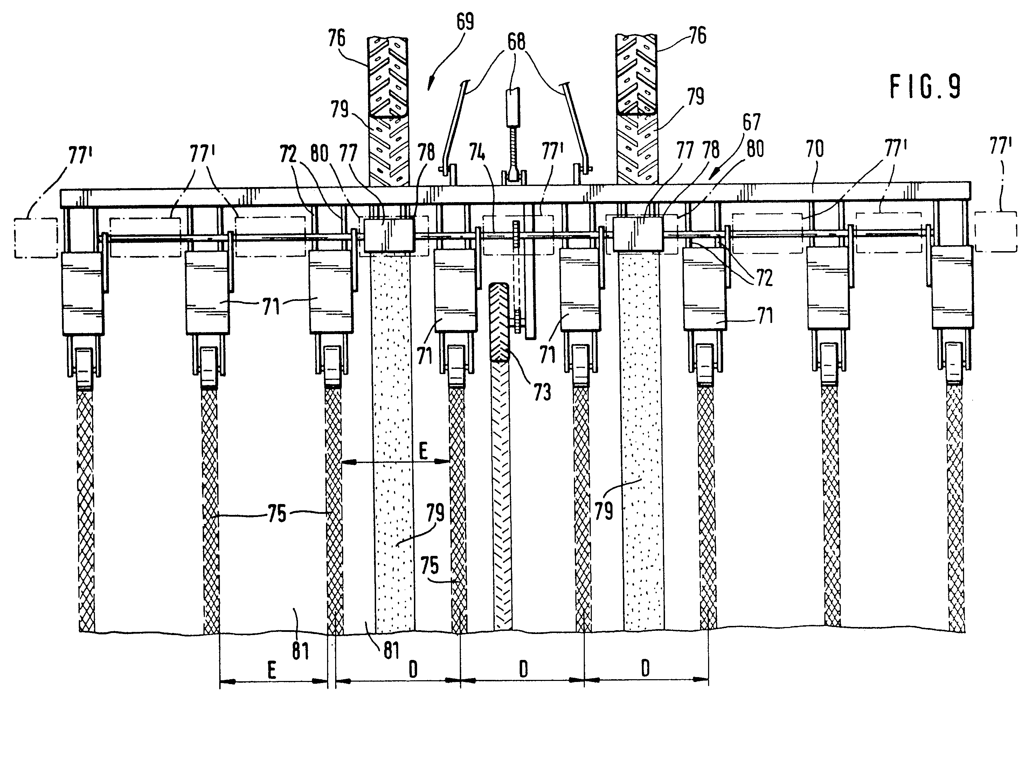

Die Sämaschine gemäss Fig. 9 ist als Einzelkornsämaschine 67 ausgebildet und an dem Dreipunktkraftheber 68 des Schleppers 69 angekuppelt. Die Einzelkornsämaschine 67 weist den Tragrahmen 70 auf, an dem die einzelnen Einzelkornsägeräte 71 mittels der Lenker 72 angelenkt sind. Die Dosiermechanismen der Einzelkornsägeräte 71 werden von dem Antriebsrad 73 über die Antriebswelle 74 angetrieben. Die Einzelkornsägeräte 71 sind jeweils in einem Abstand D von ca. 45 bis 60 cm zueinander angeordnet. Die Einzelkornsägeräte 71 legen das Nutzpflanzensaatgut, beispielsweise Mais und Rüben, in den durch die schraffierten Bänder gekennzeichneten Reihen 75 ab. In dem Bereich hinter den Laufrädern 67 des Schleppers 69 sind an dem Tragrahmen 70 der Einzelkornsämaschine 67 jeweils die zusätzlichen Sävorrichtungen 77 angeordnet. Die Dosiervorrichtungen dieser Sävorrichtungen 77 werden ebenfalls von der Antriebswelle 74 mit angetrieben. Die Sävorrichtungen 77 weisen jeweils einen Vorratsbehälter 78 auf. Durch die zusätzlichen Sävorrichtungen 77 wird ein fahrgassengeeignetes Saatgut in dem Boden in dem Bereich der Fahrspuren 79 der Schlepperlaufräder 76 abgelegt. In diesen mit dem «Fahrgassensaatgut» besäten Spuren fahren bei den nachfolgenden Pflanzenschutz-, Dünge- und Pflegemassnahmen die entsprechenden Maschinen. Hinter den Sävorrichtungen 77 können jeweils nicht dargestellte Zustreichelemente angeordnet sein, die das «Fahrgassensaatgut» etwas in den Boden einarbeiten.

Weiterhin ist vorgesehen, dass die Sävorrichtungen 77 eine um die durch die strichpunktierten Linien erweiterten Vorratsbehälter 80 aufweisen, um so durch entsprechende Ausgestaltung der Dosiervorrichtungen bzw. Säorgane der Sävorrichtungen 77, die gesamte Breite E des Streifens 81 zwischen zwei benachbarten Nutzpflanzenreihen 75 mit einem anderen bzw. «Fahrgassenpflanzensaatgut» zu besäen. Hierbei sind dann zwischen allen Einzelkornsägeräten die mit strichpunktierten Linien angedeuteten zusätzlichen Sävorrichtungen 77' mit den erweiterten Vorratsbehältern 80 angeordnet.

Wenn nur die für nachfolgende Pflanzenschutz- und Düngemassnahmen vorgesehenen Fahrspuren bei kleinen Arbeitsbreiten der eingesetzten Einzelkornsämaschine mit «Fahrgassensaatgut» besät werden soll, so ist beispielsweise an der zusätzlichen Sävorrichtung 77 eine Schaltkupplung zwischen der Antriebswelle 74 und der Dosiervorrichtung anzuordnen, so dass die Sävorrichtung 77 nicht bei jeder Feldüberfahrt, sondern nur in den für die Pflanzenschutz- und Düngemassnahme vorgesehenen Fahrabständen (Arbeitsbreite dieser Maschinen) «Fahrgassensaatgut» in den nicht mit Nutzpflanzensaatgut besäten Streifen, in denen dann die Pflanzenschutz- bzw. Düngemaschinen fahren, zwischen den mit Nutzpflanzensaatgut Reihen 75 ausbringen. Zum entsprechenden Schalten ist dann eine entsprechende Schaltvorrichtung, ähnlich der Fahrgassenschalteinrichtung, an der Einzelkornsämaschine angeordnet.

In den Fahrgassen 8, der Fahrspuren 79 bzw. in den breiten nicht mit Nutzpflanzensaatgut besäten Streifen zwischen den mit Nutzpflanzensaatgut besäten Reihen 75 wird also ein Saatgut ausgebracht, welches nicht Nutzpflanzensaatgut ist. Dieses andere Saatgut sollte so ausgewählt werden, dass es sehr leicht vom Mähdrescher aus dem Nutzpflanzensaatgut – Getreide, wie Gerste, Roggen, Hafer, Weizen etc. – leicht herausgereinigt werden kann, im Anbauzyklus nicht zur Abreife kommen und von den betriebsüblichen Spritzfolgen im Folgejahr leicht bekämpft werden kann. Dieses andere Saatgut, welches in den Fahrgassen zwischen den Nutzpflanzen gesät wird, kann ökologisch wünschenswerte Pflanzen hervorbringen. Es ist auch möglich, in den Fahrgassen 8, den Fahrspuren 79 bzw. den breiten Streifen zwischen den Nutzpflanzenreihen Samen von Pflanzen zu säen, die durch den modernen Ackerbau in ihrer Existenz bedroht sind, obgleich ihr Einfluss auf den Getreideertrag von untergeordneter oder keiner Bedeutung ist. Hierbei ist es beispielsweise möglich, bei einem dreireihigen Fahrgassensäverfahren die äusseren Reihen mit Sämereien, die artgerechte Biotope für das Niederwild bilden, und die mittlere Reihe mit Gräsern zu besäen, die die Tragfähigkeit der Fahrgassen erhöhen und den Bodendruck mindern, sowie die Erosion in den Fahrspuren vermindern. Auch können, wie oben beschrieben, Gemische verschiedenster Gräser und Biotope im Breitsaatverfahren in den Fahrgassen 8 und Fahrspuren 79 sowie den breiten Streifen zwischen den Nutzpflanzenreihen ausgebracht werden.

**Patentansprüche**

1. Verfahren für die Aussaat von Nutzpflanzensaatgut, vorzugsweise Getreide sowie Mais und Rüben, bei dem das Saatgut in zueinander im wesentlichen parallel verlaufenden Reihen oder in Breitsaat ausgesät wird, wobei breitere Fahrstreifen (8, 79), in denen bei den nachfolgenden Pflanzenschutz- und Düngemassnahmen die Laufräder der jeweiligen landwirtschaftlichen Fahrzeuge fahren, nicht mit dem Nutzpflanzensaatgut besät werden, dadurch gekennzeichnet, dass beim Aussäen des Nutzpflanzensaatgutes die Fahrstreifen (8, 79) gleichzeitig mit einem anderen, den Fahrstreifenboden stabilisierenden Saatgut besät werden.

2. Verfahren nach Anspruch 1, dadurch gekennzeichnet, dass die Fahrstreifen (8, 79) mit einem Saatgut besät werden, welches nicht Nutzpflanzensaatgut ist.

3. Verfahren nach Anspruch 1 oder 2, dadurch gekennzeichnet, dass zusätzlich zu den Fahrstreifen (8, 79) für nachfolgende Fahrzeuge auch die Streifen (81) zwischen den Reihen (75) in denen Mais oder Rüben gesät sind, mit dem anderen Saatgut besät werden.

4. Verfahren nach mindestens einem der Ansprüche 1 bis 3, dadurch gekennzeichnet, dass die Fahrstreifen (8, 79) mit einem Saatgut besät werden, welches – nach dem Auflaufen – geeignet ist, im wesentlichen unbeschadet überfahren zu werden.

5. Verfahren nach mindestens einem der Ansprüche 1 bis 4, dadurch gekennzeichnet, dass die Fahrstreifen (8, 79) mit einem Saatgut besät werden, welches Wurzeln bildet, die die befahrenen Fahrspuren – nach dem Auflaufen – auflockern.

6. Verfahren nach mindestens einem der Ansprüche 1 bis 4, dadurch gekennzeichnet, dass die Fahrstreifen (8, 79) mit einem Saatgut besät werden, welches Wurzeln bildet, die den Boden in den Fahrspuren nach dem Auflaufen zusammenhalten.

7. Verfahren nach mindestens einem der Ansprüche 1 bis 6, dadurch gekennzeichnet, dass die Fahrstreifen (8, 79) mit einem Saatgut besät werden, welches sehr schnell den Boden – nach dem Auflaufen – in den Fahrstreifen bedeckt.

8. Verfahren nach einem oder mehreren der vorstehenden Ansprüche, dadurch gekennzeichnet, dass die Fahrstreifen (8, 79) aus einer Mischung der vorgenannten Saatgüter besät werden.

9. Verfahren nach mindestens einem der Ansprüche 1 bis 8, dadurch gekennzeichnet, dass die Fahrstreifen (8, 79) mit einem Saatgut besät werden, welches zunächst im Herbst aufläuft, Wurzeln bildet, jedoch nicht winterhart ist und bei Frost abstirbt, wobei die Wurzelmasse jedoch erhalten bleibt.

10. Verfahren nach mindestens einem der Ansprüche 1 bis 9, dadurch gekennzeichnet, dass die Fahrstreifen (8, 79) mit einem Saatgut besät werden, welches geeignet ist, das Wild vom Fressen der Nutzpflanzen abzulenken.

11. Vorrichtung zur Durchführung des Verfahrens nach einem oder mehrerer der Ansprüche 1 bis 10, bestehend aus einer Sämaschine (3) mit Vorratsbehälter (14) und Dosierorganen (15), die das sich im Vorratsbehälter befindliche Nutzpflanzensaatgut in einstellbaren Mengen Säelementen zuführen, die dieses Saatgut in Reihen im Boden ablegen, wobei in periodischer Wiederkehr in Abständen, die ein Vielfaches der Arbeitsbreite der Sämaschine entsprechen, die Saatgutzufuhr zu bestimmten Säelementen durch Saatgutzufuhrunterbrechungselemente abschaltbar ist, so dass Streifen entstehen, die von dem Nutzpflanzensaatgut freigehalten werden und für die Laufräder von Fahrzeugen für nachfolgende Pflanzenschutz- und Düngemassnahmen zum Befahren vorgesehen sind, dadurch gekennzeichnet, dass an der Sämaschine (3) eine zusätzliche Sävorrichtung (35, 46) angeordnet ist, die den in den freizuhaltenden Streifen (8) angeordneten Säelementen (16', 38) ein anderes Saatgut zuführen.

12. Vorrichtung nach Anspruch 11, dadurch gekennzeichnet, dass die Sämaschine (3) zumindest einen weiteren Vorratsbehälter (36, 47) mit Dosierorganen (37, 48) aufweist, die den in den freizuhaltenden Streifen (8) angeordneten Säelementen (16', 38) das andere Saatgut zuführen.

13. Vorrichtung nach Anspruch 11 oder 12, dadurch gekennzeichnet, dass zusätzliche Säelemente (38) für das andere Saatgut an der Sämaschine (3) angeordnet sind.

14. Vorrichtung nach mindestens einem der Ansprüche 1 bis 13, bei der eine Schaltvorrichtung zum Schalten der Saatgutunterbrechungselemente an der Sämaschine angeordnet ist, dadurch gekennzeichnet, dass die Sävorrichtung (35, 46) für das andere Saatgut mit der Schaltvorrichtung (25) derart gekoppelt ist, dass die Sävorrichtung (35, 46) jeweils das andere Saatgut ausbringt, wenn die Saatgutunterbrechungselemente die Saatgutzufuhr zu den Fahrgassensäscharen (16') unterbrechen.

15. Vorrichtung nach mindestens einem der Ansprüche 1 bis 14, bei der eine Schaltvorrichtung zum Schalten der Saatgutunterbrechungselemente und eine Vorlaufmarkierung an der Sämaschine angeordnet ist, dadurch gekennzeichnet, dass die Sävorrichtung (35) für das andere Saatgut an der Vorlaufmarkierung (27) angeordnet ist.

16. Vorrichtung nach Anspruch 15, bei der die Vorlaufmarkierungseinrichtung zumindest eine drehbar gelagerte Markierungsscheibe aufweist, dadurch gekennzeichnet, dass an der Markierungsscheibe (30) ein Antrieb (39) angeordnet ist, über den die Dosierorgane (37) der Sävorrichtung (35) antreibbar sind.

17. Vorrichtung zur Durchführung des Verfahrens nach einem oder mehreren der Ansprüche 1 bis 10, bestehend aus einer Einzelkornsämaschine (67) mit mehreren aus einer Einzelkornsämaschine mit mehreren in grösseren Querabständen zueinander angeordneten Sägeräten (71), die das auszubringende Saatgut, wie Mais und Rüben im Boden ablegen, dadurch gekennzeichnet, dass an der Einzelkornsämaschine (67) eine zusätzliche Sävorrichtung (77) angeordnet ist, die ein anderes Saatgut in den Fahrspuren (79) der Einzelkornsämaschine (67) bzw. des die Einzelkornsämaschine (67) ziehenden Schleppers (69) ablegen.

18. Vorrichtung zur Durchführung des Verfahrens nach einem oder mehreren der Ansprüche 1 bis 10, bestehend aus einer Einzelkornsämaschine (67) mit mehreren in grösseren Querreihen zueinander angeordneten Sägeräten (71), die das auszubringende Saatgut, wie Mais und Rüben im Boden ablegen, dadurch gekennzeichnet, dass an der Einzelkornsämaschine (67) eine zusätzliche Sävorrichtung (77, 77') angeordnet ist, die ein anderes Saatgut in den Streifen (81) zwischen den Reihen (75), in den Mais oder Rüben abgelegt sind, in denen später die Laufräder von Fahrzeugen für die nachfolgenden Pflanzenschutz- und Düngungsmassnahmen fahren, ablegt.

19. Vorrichtung zur Durchführung von Pflanzenschutzmassnahmen auf einer nach dem Verfahren nach einem oder mehreren der Ansprüche 1 bis 10 besäten Fläche, wobei die Vorrichtung aus einer Pflanzenschutzspritze (58) mit einem Spritzgestänge (61) besteht, dadurch gekennzeichnet, dass im Bereich der mit dem anderen Saatgut besäten Streifen (8) Mittel (62, 66, 66') vorgesehen sind, die es ermöglichen, kein Spritzmittel in diesen Streifen (8) auszubringen.

20. Vorrichtung nach Anspruch 19, dadurch gekennzeichnet, dass die Mittel im Bereich der Streifen (8) Abdeckschirme (66, 66') sind, die an dem Spritzgestänge (61) angeordnet sind.

21. Vorrichtung nach Anspruch 19 oder 20, dadurch gekennzeichnet, dass die Mittel in dem Bereich der Streifen (8) OC-Düsen (62) sind.

22. Vorrichtung nach mindestens einem der Ansprüche 19 bis 21, dadurch gekennzeichnet, dass die Anordnung der Düsen (62, 63) der Fahrgassen (8) anpassbar ist.

**Claims**

1. Method for sowing agricultural crop seeds, preferably cereals as well as corn and beet, wherein the seed is sown in rows extending substantially parallel to one another or in a broadcast manner, relatively wide tramlines (8, 79) – in which the running wheels of the particular agricultural vehicles travel during the subsequent plant-protecting and fertilising measures – not being sown with the agricultural crop seeds, characterised in that, during sowing of the agricultural crop seeds, the tramlines (8, 79) are sown simultaneously with another seed which stabilises the base of the tramline.

2. Method according to claim 1, characterised in that the tramlines (8, 79) are sown with a seed which is not an agricultural crop seed.

3. Method according to claim 1 or 2, characterised in that, in addition to the tramlines (8, 79) for subsequent vehicles, the strips (81) between the rows (75), in which corn or beet is sown, are also sown with the other seed.

4. Method according to at least one of claims 1 to 3, characterised in that the tramlines (8, 79) are sown with a seed which – after germination – is suitable for being driven over and remaining substantially undamaged.

5. Method according to at least one of claims 1 to 4, characterised in that the tramlines (8, 79) are sown with a seed which forms roots which – after germination – break up the tracks which have been made.

6. Method according to at least one of claims 1 to 4, characterised in that the tramlines (8, 79) are sown with a seed which forms roots which – after germination – hold the soil together in the tracks.

7. Method according to at least one of claims 1 to 6, characterised in that the tramlines (8, 79) are sown with a seed which – after germination – very rapidly covers the soil in the tramlines.

8. Method according to one or more of the preceding claims, characterised in that the tramlines (8, 79) are sown with a mixture of the above-mentioned seeds.

9. Method according to at least one of claims 1 to 8, characterised in that the tramlines (8, 79) are sown with a seed which initially germinates in the autumn and forms roots, but it is not hardy and dies down with the frost, yet the root mass remains.

10. Method according to at least one of claims 1 to 9, characterised in that the tramlines (8, 79) are sown with a seed which is suitable for deterring animals from eating the crops.

11. Apparatus for carrying out the method according to one or more of claims 1 to 10, comprising a seed drill (3) which is provided with a hopper (14) and metering means (15) which supply the seed of agricultural crops, situated in the hopper, in adjustable amounts to sowing members which deposit this seed in rows in the soil, the supply of seeds to predetermined sowing members being periodically disconnectable by means of seed supply interrupting means at intervals which correspond to a multiple of the working width of the seed drill, so that tramlines are produced which are kept free from the agricultural crop seed and are provided for the running wheels of vehicles to travel therein for subsequent plant-protecting and fertilising measures, characterised in that an additional sowing device (35, 46) is disposed on the seed drill (3) and supplies another seed to the sowing means (16', 38) disposed in the tramlines (8) which are to be kept free.

12. Apparatus according to claim 11, characterised in that the seed drill (3) has at least one additional hopper (36, 47) which is provided with metering means (37, 48) which supply the other seed to the sowing means (16', 38) disposed in the tramlines (8) which are to be kept free.

13. Apparatus according to claim 11 or 12, characterised in that additional sowing means (38) for the other seed are disposed on the seed drill (3).

14. Apparatus according to at least one of claims 1 to 13, wherein a switching device for controlling the seed interrupting means is disposed on the seed drill, characterised in that the sowing device (35, 46) for the other seed is connected to the switching device (25) in such a manner that the sowing device (35, 46) discharges the other seed whenever the seed interrupting means interrupt the supply of seeds to the tramline sowing coulters (16').

15. Apparatus according to at least one of claims 1 to 14, wherein a switching device for switching the seed interrupting means and an advancing marking arrangement are disposed on the seed drill, characterised in that the sowing device (35) for the other seed is disposed on the advancing marking means (27).

16. Apparatus according to claim 15, wherein the advancing marking arrangement has at least one rotatably mounted marking disc, characterised in that a drive (39) is disposed on the marking disc (30), by means of which drive the metering means (37) of the sowing device (35) are drivable.

17. Apparatus for carrying out the method according to one or more of claims 1 to 10, comprising a seed drill (67) for sowing single seeds having a plurality of sowing arrangements (71) which are disposed at comparatively large transverse intervals relative to one another and deposit the seed to be discharged, such as corn and beet, in the soil, charcterised in that an additional sowing device (77) is disposed on the single seeding drill (67) and discharges another seed in the tracks

19 0193804 20

(79) of the single seeding drill (67) or of the tractor (69) which tows the single seeding drill (67).

18. Apparatus for carrying out the method according to one or more of claims 1 to 10, comprising a seed drill (67) for sowing single seeds having a plurality of sowing arrangements (71) which are disposed in comparatively long transverse rows relative to one another and deposit the seed to be discharged, such as corn and beet, in the ground, characterised in that an additional sowing device (77, 77') is disposed on the single seeding drill (67) and deposits another seed in the strips (81) between the rows (75), in which corn or beet is deposited, the running wheels of vehicles subsequently travelling in the tramlines for the subsequent plant-protecting and fertilising measures.

19. Apparatus for carrying out plant-protecting measures over an area which has been sown by the method according to one or more of claims 1 to 10, the apparatus comprising a plant-protecting sprayer (58) provided with a spray boom (61), characterised in that means (62, 66, 66') are provided in the region of the tramlines (8) which are sown with the other seed, the means permitting no spraying agent to be discharged in these tramlines (8).

20. Apparatus according to claim 19, characterised in that the means in the region of the tramlines (8) are cover screens (66, 66') which are disposed on the spray boom (61).

21. Apparatus according to claim 19 or 20, characterised in that the means in the region of the tramlines (8) are OC nozzles (62).

22. Apparatus according to at least one of claims 19 to 21, characterised in that the disposition of the nozzles (62, 63) is adaptable to the tramlines (8).

**Revendications**

1. Procédé de semis pour plantes utiles de préférence des céréales, du maïs et des betteraves, procédé selon lequel la semence est distribuée dans des rangées essentiellement parallèles ou de manière large, les bandes de passage larges (8, 79) utilisées ultérieurement par les roues des machines agricoles distribuant les engrais et les produits phytosanitaires, ne sont pas ensemencées avec de la semence de plantes utiles, procédé caractérisé en ce que lors de la distribution des semences utiles, on ensemence les bandes de passage (8, 79) en même temps avec une autre semence qui stabilise le sol des bandes de passage.

2. Procédé selon la revendication 1, caractérisé en ce que les bandes de passage (8, 79) reçoivent une semence qui n'est pas de la semence de plante utile.

3. Procédé selon la revendication 1 ou 2, caractérisé en ce qu'en plus des bandes de passage (8, 79) pour le passage des véhicules ultérieurs, on ensemence également les bandes (81) comprises entre les rangées (75) dans lesquelles sont semés du maïs ou des betteraves, en utilisant une autre semence.

4. Procédé selon au moins l'une des revendications 1 à 3, caractérisé en ce que les bandes (8, 79) reçoivent une semence qui, une fois levée, peut être parcourue sans être endommagée.

5. Procédé selon au moins l'une des revendications 1 à 4, caractérisé en ce que les bandes de passage (8, 79) reçoivent une semence qui forme des racines ammeublissant les traces de passage une fois que cette semence a levé.

6. Procédé selon au moins l'une des revendications 1 à 4, caractérisé en ce que les bandes de passage (8, 79) reçoivent une semence de plante formant des racines qui, après la levée, stabilise le sol dans les traces de passage.

7. Procédé selon au moins l'une des revendications 1 à 6, caractérisé en ce que les bandes de passage (8, 79) reçoivent une semence qui recouvre très rapidement le sol après la levée dans les bandes de passage.

8. Procédé selon l'une ou plusieurs des revendications précédentes, caractérisé en ce que les bandes de passage (8, 79) reçoivent un mélange des semences mentionnées ci-dessus.

9. Procédé selon au moins l'une des revendications 1 à 8, caractérisé en ce que les bandes de passage (8, 79) reçoivent une semence qui lève tout d'abord à l'automne, forme des racines mais ne résiste pas à l'hiver et est détruite par la gelée en laissant toutefois subsister la masse des racines.

10. Procédé selon au moins l'une des revendications 1 à 9, caractérisé en ce que les bandes de roulement (8, 79) reçoivent une semence qui permet de détourner le gibier et de s'attaquer au plantes utiles.

11. Dispositif pour la mise en œuvre du procédé selon l'une ou plusieurs des revendications 1 à 10, dispositif comprenant un semoir (3) avec une trémie d'alimentation (14) et des organes de dosage (15) qui fournissent des quantités réglables de semences de plantes utiles contenues dans la trémie, pour déposer cette semence dans le sol en ligne, et à des intervalles qui se répètent périodiquement et qui représentent un multiple de la largeur du semoir, l'alimentation en semence de certains dispositifs-semoirs est coupée par des éléments d'interruption d'alimentation de manière à former des bandes ne contenant pas de semence utile et destinées au passage des roues des machines effectuant les épandages d'engrais et les traitements phytosanitaires ultérieurs, dispositif caractérisé en ce que le semoir (3) comporte un dispositif-semoir complémentaire (35, 46) qui alimente les organes-semoirs (16', 38) prévus au niveau des bandes (8) laissées libres, par une autre semence.

12. Dispositif selon la revendication 11, caractérisé en ce que le semoir (3) comporte au moins une autre trémie (36, 47) avec des organes de dosage (37, 48) qui fournissent cette autre semence aux organes-semoirs (16', 38) associés aux bandes (8) laissées libres.

13. Dispositif selon la revendication 11 ou 12, caractérisé en ce que les organes-semoirs complémentaires (38) destinés à l'autre semence sont prévus sur le semoir (3).

14. Dispositif selon au moins l'une des revendications 1 à 13, comportant un dispositif de commutation pour commuter les éléments d'interruption d'alimentation de semence du semoir, dispositif caractérisé en ce que le dispositif-semoir (35, 46) destiné à l'autre semence est associé au dispositif de commutation (25) de façon que le dispositif-semoir (35, 46) fournisse chaque fois l'autre semence lorsque les éléments d'interruption de semence interrompent l'alimentation en semence des socs-semoirs associés aux chemins de passage (16').

15. Dispositif selon au moins l'une des revendications 1 à 14 comportant un dispositif de commutation pour commuter les éléments d'interruption de semence et un dispositif de marquage prévu sur le semoir, dispositif caractérisé en ce que le dispositif-semoir (35) destiné à l'autre semence est prévu sur le dispositif de marquage (27).

16. Dispositif selon la revendication 15 dans lequel le dispositif de marquage est constitué par au moins un disque de marquage monté rotatif, dispositif caractérisé en ce que le dispositif de marquage (30) comporte un moyen d'entraînement (39) qui entraîne les organes de dosage (37) du dispositif-semoir (35).

17. Dispositif pour la mise en œuvre du procédé selon l'une ou plusieurs des revendications 1 à 10 composé d'un semoir de précision (67) avec plusieurs organes-semoirs (71) associés à des intervalles transversaux, importants, et déposant dans le sol la semence à distribuer telle que du maïs et des betteraves, dispositif caractérisé par un dispositif-semoir complémentaire (77) prévu sur le semoir de précision (67), dispositif complémentaire qui distribue une autre semence dans les traces de passage (79) du semoir de précision (67) ou du tracteur (69) qui entraîne le semoir de précision (67).

18. Dispositif pour la mise en œuvre du procédé selon l'une ou plusieurs des revendications 1 à 10 composé d'un semoir de précision (67) avec plusieurs organes-semoirs (71) prévus dans des rangées transversales importantes et déposant dans le sol des semences telles que du maïs et de betteraves, dispositif caractérisé en ce que le semoir de précision (67) comporte un dispositif-semoir complémentaire (77, 77') distribuant une autre semence dans les bandes (81) comprises entre les rangées (75) de maïs ou de betteraves, pour les bandes utilisées ultérieurement par les roues des machines effectuant les épandages d'engrais et les traitements phytosanitaires ultérieurs.

19. Dispositif pour effectuer des traitements phytosanitaires sur une surface ensemencée selon le procédé correspondant à une ou plusieurs des revendications 1 à 10, le dispositif se composant d'un pulvérisateur de produits phytosanitaires (58) avec une barre de pulvérisation (61), dispositif caractérisé en ce qu'au niveau des bandes (8) recevant l'autre semence, il comporte des moyens (62, 66, 66') permettant de ne pas distribuer de liquide de protection dans les bandes (8).

20. Dispositif selon la revendication 19, caractérisé en ce que les moyens prévus au niveau des bandes (8) ont des écrans (66, 66') portés par la barre (61) du pulvérisateur.

21. Dispositif selon la revendication 19 ou 20, caractérisé en ce que les moyens au niveau des bandes (8) sont des buses excentrées (62).

22. Dispositif selon au moins l'une des revendications 19 à 21, caractérisé en ce que le montage des buses (62, 63) est adaptable aux chemins de passage (8).

FIG.1

Start

0193804

FIG.2

FIG.3

15

FIG.4

17

0193804

FIG.5

FIG.6

FIG.7

FIG. 8

FIG.9